# FASCICULE DE BREVET EUROPEEN

(11) **EP 4 107 213 B1**
(45) Date de publication et mention de la délivrance du brevet: **03.04.2024**
(21) Numéro de dépôt: 21711936.1
(22) Date de dépôt: 18.02.2021
(51) Int. Cl.: C08J 7/04, B29D 30/06, C08J 7/043, B29C 33/58

(54) **PROCEDE DE MODIFICATION DES MEMBRANES DE CUISSON EXPANSIBLES POUR LA FABRICATION DE PNEUMATIQUE**
VERFAHREN ZUR MODIFIZIERUNG VON EXPANDIERBAREN HÄRTUNGSMEMBRANEN ZUR HERSTELLUNG VON REIFEN
METHOD FOR MODIFYING EXPANDABLE CURING MEMBRANES FOR MANUFACTURING TYRES

(30) Priorité: 20.02.2020 FR 2001697
(43) Date de publication de la demande: 28.12.2022
(73) Titulaire: COMPAGNIE GENERALE DES ETABLISSEMENTS MICHELIN, 63000 Clermont-Ferrand (FR)
(72) Inventeur: FEDURCO, Milan, 63040 CLERMONT-FERRAND Cedex 9 (FR); RIBEZZO, Marco, 63040 CLERMONT-FERRAND Cedex 9 (FR); DELFINO, Antonio, 63040 CLERMONT-FERRAND Cedex 9 (FR); FAUGERAS, Alain, 63040 CLERMONT-FERRAND Cedex 9 (FR)
(74) Mandataire: M.F.P. Michelin
(86) Numéro de dépôt international: PCT/FR2021/050289
(87) Numéro de publication internationale: WO 2021/165622

(56) Documents cités:
- WO-A1-2021/019177
- US-A- 4 889 677
- US-A1- 2008 093 771
- US-A1- 2009 081 323

## Description

Le domaine de l'invention est celui des procédés de modification des membranes de cuisson expansibles pour la fabrication de pneumatique.

Les pneumatiques sont habituellement obtenus par moulage et vulcanisation d'une enveloppe crue à l'intérieur d'un moule de cuisson. Les parois externes de l'enveloppe sont plaquées contre les parois internes du moule de cuisson au moyen d'une membrane de cuisson expansible sous l'effet d'un fluide sous pression. Le dessin de la bande de roulement des garnitures du moule et celui des coquilles s'impriment sur l'enveloppe crue qui est vulcanisée à l'aide de la chaleur. La membrane de cuisson se déploie à l'intérieur de l'enveloppe crue avant la cuisson et elle se replie à la fin. De ce fait, des mouvements relatifs se produisent entre la membrane et l'enveloppe, ce qui est susceptible de produire des déformations de l'enveloppe et l'usure de la membrane. La dégradation de la membrane par ces phénomènes de déformation et d'usure se trouve aussi accentuée par deux facteurs.

Le premier facteur est la propension de la surface de la membrane et de la surface de la gomme intérieure du pneumatique à se coller l'une à l'autre en raison de la similitude de leur composition chimique. En effet, les membranes de cuisson expansibles pour la fabrication de pneumatique sont traditionnellement faites d'un matériau caoutchouteux qui est généralement une composition réticulée et renforcée de caoutchouc butyl, copolymère d'isobutylène et d'isoprène, composition très proche des compositions de caoutchouc qui constituent la gomme intérieure des pneumatiques et qui entrent en contact avec la surface externe de la membrane d'un moule de cuisson au moment de la cuisson du pneumatique.

Le deuxième facteur est la sévérité des conditions d'usage de la membrane, puisque la cuisson des pneumatiques est conduite à des températures d'au moins 100°C et à des pressions supérieures à 10 bars en présence de vapeur d'eau.

Pour prévenir la dégradation de la membrane, notamment en empêchant l'adhésion de la gomme intérieure du pneumatique à la membrane de cuisson, la gomme intérieure de l'enveloppe crue des pneumatiques est généralement enduite d'une solution à propriété anti-collante, par exemple à base de polymère silicones, et connue sous le nom de « badigeon » (en anglais « lining cement »). Un tel traitement est fait avant la cuisson, par un opérateur qui travaille sur un poste dédié, en sortie du procédé d'assemblage des semi-finis constitutifs du pneumatique. Cette opération s'avère très consommatrice de temps et de main d'oeuvre.

Pour pallier ce problème, il a été proposé de supprimer cette étape d'application d'un badigeon à la surface de la gomme intérieure du pneumatique. Une solution consiste à apposer à la surface de la membrane un revêtement adhésif à la membrane sans qu'il n'ait une propension à adhérer à la gomme intérieure du pneumatique. Les revêtements adhésifs décrits par exemple dans les documents US 4,889,677, US 20080093771, WO 2018115600, WO 2015166412 sont constitués de compositions de caoutchouc silicone réticulées à partir de mélanges d'au moins deux polysiloxanes, l'un portant des groupes alcoxysilane ou silanol, l'autre des groupes époxy ou des groupes contenant une liaison Si-H groupes. Il a été également proposé dans les documents US 20130323428 et US 20080093771 des compositions de caoutchouc silicone réticulées à partir de mélanges de polysiloxanes, les uns portant des groupes vinyles, les autres des groupes contenant des liaisons SiH.

Pour augmenter l'adhérence d'une composition de caoutchouc silicone à un substrat, une solution proposée consiste à modifier la surface du substrat avant d'apposer la composition de caoutchouc silicone à la surface du substrat. La modification de la surface du substrat peut être réalisée par exemple par un traitement au plasma, par un traitement au corona ou par un traitement avec un primaire d'adhésion, le traitement avec un primaire d'adhésion pouvant être complémentaire à un traitement au plasma ou corona. Les primaires d'adhésion sont des silanes sensibles à l'humidité et à la température et permettent de renforcer les forces d'adhésion entre le substrat et la composition de caoutchouc silicone. Mais le traitement avec un primaire d'adhésion ne conduit pas non plus à une adhérence des compositions connues de silicone qui résiste aux conditions sévères d'utilisation ci-dessus mentionnées.

Le procédé pour modifier la membrane de cuisson en recouvrant sa surface d'une composition de caoutchouc silicone doit pouvoir être mis en oeuvre de façon simple et rapide, et sa mise en oeuvre doit pouvoir conduire à la préparation d'une membrane capable de garder après plusieurs cycles de cuisson sa souplesse pour pouvoir se gonfler et se dégonfler à chaque cycle de cuisson sans que le revêtement ne se décolle.

La Demanderesse a découvert un nouveau procédé de modification des membranes qui permet de satisfaire ce compromis.

Ainsi, l'invention concerne un procédé de modification d'une membrane expansible de cuisson pour pneumatique, laquelle membrane présente une surface destinée à entrer au contact d'une enveloppe d'un pneumatique, lequel procédé comprend les étapes suivantes :
a) Appliquer sur ladite surface une couche d'une composition de caoutchouc silicone, la composition de caoutchouc silicone comprenant un premier organopolysiloxane liquide ayant des motifs de répétition (R₂SiO_{2/2}) et ayant deux extrémités de chaîne portant chacune un groupe alcényle, un deuxième organopolysiloxane liquide ayant des motifs de répétition (R'HSiO_{2/2}) et ayant deux extrémités de chaîne portant chacune un groupe SiR'₃O_{1/2}, et un catalyseur d'hydrosilylation photoactivable, les symboles R, identiques ou différents, représentant un groupe alkyle, aryle ou aralkyle, les symboles R', identiques ou différents, représentant un groupe alkyle, le ratio entre le nombre de motifs (R'HSiO_{2/2}) et le nombre de groupes alcényles étant supérieur à 1,
b) Exposer la composition de caoutchouc silicone recouvrant ladite surface à une irradiation de la lumière ultraviolet-visible.

### Description

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges ...

Dans la présente demande, on entend par substance liquide une substance ayant la capacité de prendre à terme la forme de son contenant à température ambiante (23°C).

Le procédé conforme à l'invention est un procédé de modification d'une membrane expansible de cuisson pour pneumatique. Ainsi le procédé conforme à l'invention comprend deux étapes. L'une des étapes est l'application d'une composition spécifique de caoutchouc silicone sous la forme de couche à l'état cru sur la surface externe de la membrane de cuisson, c'est-à-dire la surface de la membrane qui est destinée à entrer au contact d'une enveloppe d'un pneumatique dans une presse de cuisson. L'autre étape est la réticulation de la composition spécifique appliquée sur ladite surface de la membrane. La mise en oeuvre du procédé conforme à l'invention conduit à une membrane expansible de cuisson dont la surface externe est recouverte d'une couche d'une composition de caoutchouc silicone réticulée.

Les membranes de cuisson expansibles pour pneumatique (en anglais « bladder ») sont bien connues de l'homme du métier. Elles sont placées traditionnellement dans des presses de cuisson utilisées dans la fabrication des pneumatiques. Elles sont constituées de compositions à base de caoutchouc butyl, halogéné ou non. Le caoutchouc butyl est un copolymère d'isobutylène et d'isoprène connu pour ses propriétés d'étanchéité. Une composition de caoutchouc constitutive d'une membrane de cuisson contient généralement une charge renforçante telle qu'un noir de carbone. Elle contient aussi un système de réticulation composé d'une résine. Les systèmes de réticulation composés d'une résine et utilisés pour réticuler des compositions de caoutchouc pour membrane de cuisson expansible sont aussi bien connus de l'homme du métier. La résine est typiquement une résine phénolique, halogénée ou non. A titre de résine phénolique, on peut citer les résines formophénoliques. La composition de caoutchouc constitutive d'une membrane de cuisson peut comprendre divers ingrédients comme des antioxydants, des antiozonants, des pigments, des cires, des plastifiants comme des huiles de mise en oeuvre.

La composition de caoutchouc silicone utile aux besoins de l'invention a pour caractéristique essentielle de comprendre un premier organopolysiloxane qui contient des motifs (R₂SiO_{2/2}) et un deuxième organopolysiloxane qui contient des motifs (R'HSiO_{2/2}) et des motifs SiR'₃O_{1/2}, les symboles R représentant un groupe alkyle, aryle ou aralkyle, les symboles R' représentant un groupe alkyle. Les groupes représentés par les symboles R et R' contiennent de préférence 1 à 8 atomes de carbone, de manière plus préférentielle 1 à 3 atomes de carbone.

Le premier organopolysiloxane a des motifs de répétition (R₂SiO_{2/2}) dans lesquels les symboles R, identiques ou différents, représentent un groupe alkyle, aryle ou aralkyle, préférentiellement alkyle. Au sein du premier organopolysiloxane, les motifs de formule (R₂SiO_{2/2}) peuvent se différencier les uns des autres par la nature de R. De préférence, les groupes représentés par les symboles R dans les motifs (R₂SiO_{2/2}) contiennent 1 à 8 atomes de carbone, plus préférentiellement 1 à 3 atomes de carbone. De manière encore plus préférentielle, les symboles R dans les motifs (R₂SiO_{2/2}) représentent un méthyle. Le premier organopolysiloxane est préférentiellement un polydialkylsiloxane, plus préférentiellement un polydiméthylsiloxane.

Selon l'invention, deux des extrémités de chaîne du premier organopolysiloxane portent chacune un groupe alcényle. On entend par groupe alcényle un groupe hydrocarboné qui contient une double liaison carbone-carbone. De préférence, les groupes alcényles sont des groupes vinyles, de formule bien connue -CH=CH₂. Très avantageusement, deux des extrémités de chaîne du premier organopolysiloxane portent chacune un groupe vinyle. Lorsque le premier organopolysiloxane est à chaîne linéaire, le premier organopolysiloxane est un organopolysiloxane α,ω-alcényle, de préférence α,ω-vinyle. De préférence, le premier organopolysiloxane est à chaîne linéaire.

Le premier organopolysiloxane est un polyorganosiloxane liquide. De préférence, il a une masse moléculaire moyenne en poids supérieure à 5000 g/mol et inférieure à 200 000 g/mol. De manière plus préférentielle, il a une masse moléculaire moyenne en poids supérieure à 10000 g/mol et inférieure à 150 000 g/mol.

Le premier organopolysiloxane peut être un produit disponible commercialement, par exemple auprès de Wacker, Gelest, Dow Corning, Bluestar, Shin-Etsu, Cabot. Il peut être aussi un mélange de plusieurs organopolysiloxanes qui se différencient les uns des autres par leurs motifs de répétition ou leur macrostructure.

Le deuxième organopolysiloxane est un polyhydroalkylsiloxane. Les motifs de formule (R'HSiO_{2/2}) dans lesquels le symbole R' représente un groupe alkyle, sont les motifs de répétition du deuxième organopolysiloxane. En d'autres termes, toutes les unités monomères du deuxième organopolysiloxane sont de formule (R'HSiO_{2/2}). Au sein du deuxième organopolysiloxane, les motifs de formule (R'HSiO_{2/2}) peuvent se différencier les uns des autres par la nature de R'. De préférence, le groupe représenté par R' contient 1 à 8 atomes de carbone, plus préférentiellement 1 à 3 atomes de carbone. De manière encore plus préférentielle, les symboles R' représentent un méthyle, auquel cas le deuxième organopolysiloxane est préférentiellement un polyhydrométhylsiloxane.

Selon l'invention, deux des extrémités de chaîne du deuxième organopolysiloxane portent chacune un groupe SiR'₃O_{1/2}, les symboles R', identiques ou différents, représentant un groupe alkyle. De préférence, les groupes représentés par les symboles R' dans SiR'₃O_{1/2} contiennent 1 à 8 atomes de carbone, plus préférentiellement 1 à 3 atomes de carbone. De manière encore plus préférentielle, les symboles R' dans SiR₃O_{1/2} représentent un méthyle. Très avantageusement, deux des extrémités de chaîne du deuxième organopolysiloxane portent chacune un groupe SiMe₃O_{1/2}. Lorsque le deuxième organopolysiloxane est à chaîne linéaire, le deuxième organopolysiloxane est un polyhydroalkylsiloxane α,ω-SiR'₃O_{1/2}, de préférence polyhydroalkylsiloxane α,ω-SiMe₃O_{1/2}. De préférence, le deuxième organopolysiloxane est à chaîne linéaire.

Avantageusement, le deuxième organopolysiloxane est un polyhydrométhylsiloxane α,ω-SiMe₃O_{1/2}.

Le deuxième organopolysiloxane est un polyorganosiloxane liquide. De préférence, il a une masse moléculaire moyenne en poids supérieure à 500 g/mol et inférieure à 30 000 g/mol. De manière plus préférentielle, il a une masse moléculaire moyenne en poids supérieure à 500 g/mol et inférieure à 10 000 g/mol. De manière encore plus préférentielle, il a une masse moléculaire moyenne en poids supérieure à 1000 g/mol et inférieure à 5000 g/mol.

Le deuxième organopolysiloxane peut être un produit disponible commercialement, par exemple auprès de Wacker, Gelest, Sigma-Aldrich. Il peut être aussi un mélange de plusieurs organopolysiloxanes qui se différencient les uns des autres par les motifs de répétition ou la macrostructure.

De préférence, au moins l'un des premier organopolysiloxane et deuxième organopolysiloxane est à chaîne linéaire. Avantageusement, les deux, c'est-à-dire le premier organopolysiloxane et le deuxième organopolysiloxane, sont à chaîne linéaire.

Les quantités respectives du premier organopolysiloxane et du deuxième organopolysiloxane dans la composition selon l'invention sont régies par le ratio entre le nombre de motifs (R'HSiO_{2/2}) et le nombre de groupes alcényles et sont ajustées en conséquence en tenant compte des proportions relatives des motifs alcényles dans le premier organopolysiloxane et des proportions relatives des motifs (R'HSiO_{2/2}) dans le deuxième organopolysiloxane.

Une caractéristique essentielle de la composition de caoutchouc silicone est le ratio entre le nombre de motifs (R'HSiO_{2/2}) du deuxième organopolysiloxane introduit dans la composition de caoutchouc et le nombre de groupes alcényles du premier organopolysiloxane introduit dans la composition de caoutchouc. Ce ratio est calculé en divisant le nombre de motifs (R'HSiO_{2/2}) par le nombre de groupes alcényles. Selon l'invention, ce ratio entre le nombre de motifs (R'HSiO_{2/2}) et le nombre de groupes alcényles est supérieur à 1, préférentiellement supérieur à 5. Plus le ratio est grand devant 1, meilleures sont les propriétés mécaniques et adhésives de la composition de caoutchouc silicone, ce qui permet d'assurer une bonne résistance à la délamination de la membrane modifiée. Avantageusement, ce ratio est supérieur à 15, très avantageusement supérieur à 25. De préférence, ce ratio est inférieur à 100, préférentiellement inférieur à 90. Selon un mode de réalisation très préférentiel, ce ratio est supérieur à 15 et inférieur à 100. Avantageusement, ce ratio est supérieur à 25 et inférieur à 90.

La composition de caoutchouc silicone a aussi pour caractéristique de contenir un catalyseur d'hydrosilylation destiné à catalyser la réaction d'hydrosilylation des organosiloxanes de la composition de caoutchouc silicone par réaction des motifs (R'HSiO_{2/2}) du deuxième organopolysiloxane et des groupes alcényles du premier organopolysiloxane. Le catalyseur d'hydrosilylation est un catalyseur d'hydrosilylation photoactivable. Le catalyseur est inactif en l'absence d'une activation à une irradiation à la lumière et devient actif sous l'exposition à une irradiation de la lumière ultraviolet-visible.

De tels catalyseurs sont connus et sont par exemple décrits dans le document WO 2013173090. De préférence, le catalyseur d'hydrosilylation photoactivable est un catalyseur au platine, Pt.

On peut citer par exemple les complexes au platine portant des ligands carbonés par une liaison sigma ou pi, désignés ci-après ligand sigma ou ligand pi. On entend par ligand carboné un ligand contenant un ou plusieurs atomes de carbone. Le catalyseur d'hydrosilylation photoactivable est préférentiellement un complexe organométallique ayant au moins une liaison sigma métal-carbone, plus préférentiellement un complexe au platine avec un ou plusieurs ligands sigma, le ligand étant alkyle ou aryle, préférentiellement alkyle. Les ligands alkyles sont préférentiellement les alkyles ayant 1 à 6 atomes de carbone, plus préférentiellement les groupes méthyles. Les ligands sigma incluent aussi les groupes aryles sigma tels que les phényles, les groupes sigma silyles tels que les trialkylsilyles. On peut citer également comme catalyseurs photoactivables très préférentiels les complexes au platine ayant des ligands sigma, avantageusement alkyles, et un ligand η⁵-cyclopentadiényle, substitué ou non. De tels catalyseurs sont par exemples décrits dans le document WO 2013173090 et sont typiquement des complexes Pt (η⁵-Cp) L₃, Cp désignant le groupe cyclopentadiényle, substitué ou non, et les symboles L, identiques ou différents désignant alkyle, allyle ou aryle.

Les catalyseurs photoactivables incluent également les complexes au platine ayant un ligand pi dioléfine et un ligand sigma aryle, désignés sous l'appellation complexe platine η-dioléfine-σ-aryle, comme ceux décrits dans les documents US 4,530,879, EP 122008, EP 146307.

Les catalyseurs photoactivables incluent aussi les complexes au platine ayant pour ligand des dicétones, comme les benxoylacétones et les esters de diacide acétylènedicarboxylique.

On peut aussi mentionner les catalyseurs au platine enrobés dans une résine organique photodégradable.

Les catalyseurs photoactivables peuvent aussi être formés in-situ dans la composition de caoutchouc silicone, en utilisant des complexes Pt(0) oléfine et en leur ajoutant des ligands photoactivables adéquats.

Les catalyseurs photoactivables tout particulièrement préférés sont les complexes de formule Pt (η⁵-Cp¹) L₃, Cp¹ désignant le groupe cyclopentadiényle, un groupe cyclopentadiényle substitué par des groupes alkyles ou trialkylsilyles, et les symboles L, identiques ou différents désignant alkyle. Avantageusement, le catalyseur photoactivable est le complexe triméthyl(pentaméthylcyclopentadiényl)platine.

Comme dans toute réaction d'hydrosilylation conventionnelle, la quantité de catalyseur dans la composition est catalytique. Par quantité catalytique on entend moins d'un équivalent molaire de métal du complexe par rapport à la masse totale du premier organopolysiloxane et du deuxième organopolysiloxane. La quantité de catalyseur photoactivable est telle que la quantité de métal du catalyseur photoactivable varie préférentiellement de 10 à 5000 ppm, plus préférentiellement de 10 à 1000 ppm, encore plus préférentiellement de 500 à 1000 ppm de la masse totale du premier organopolysiloxane et du deuxième organopolysiloxane.

Il est également connu de recourir à la photosensibilisation pour activer une réaction photochimique. La photosensibilisation met en jeu l'excitation d'un sensibilisateur sous l'effet de l'irradiation, suivie d'un transfert d'électron ou d'énergie entre l'état excité du sensibilisateur et le catalyseur. Un tel sensibilisateur est appelé photosensibilisateur. Le photosensibilisateur est choisi par l'homme du métier en fonction de son spectre d'absorption spectroscopique dans la lumière utilisée pour irradier et en fonction du rendement de transfert d'électron ou d'énergie. On peut par exemple se référer à la publication « Journal of Chemistry and Photobiology A : Chemistry 303-304 (2015) 86-90 ».

Selon un mode de réalisation particulier de l'invention, la composition de caoutchouc comprend en outre un photosensibilisateur (en anglais « photosensitizer »), auquel cas le procédé met en oeuvre un mode d'activation du catalyseur par photosensibilisation. La quantité introduite de photosensibilisateur dans la composition de caoutchouc silicone varie généralement dans un domaine allant de 100 ppm à 5000 ppm de la masse totale du premier organopolysiloxane et du deuxième organopolysiloxane. Comme photosensibilisateur peuvent convenir le thioxanthen-9-one, le 2-chlorothioxanthen-9-one, le 9,10-diméthylanthrancène, le 9,10-dichloroanthrancène et le camphorequinone, préférentiellement le thioxanthen-9-one, le 9,10-diméthylanthrancène et le camphorequinone, plus préférentiellement le thioxanthen-9-one.

L'intensité de la lumière à laquelle est exposée la composition de caoutchouc pour être irradiée est ajustée par l'homme du métier en fonction des caractéristiques de la composition de caoutchouc silicone, en fonction de l'épaisseur de la couche de la composition de caoutchouc silicone appliquée sur la membrane, en fonction de la distance entre la source de la lumière et la couche de composition de caoutchouc silicone et en fonction du temps d'exposition. Le temps d'exposition est d'au moins 1 seconde, préférentiellement entre 1 et 50 secondes. L'exposition est préférentiellement séquentielle, auquel cas la composition de caoutchouc est exposée de façon intermittente à l'irradiation, la durée totale d'exposition étant comprise entre 1 et 50 secondes.

La source de la lumière pour irradier la composition de caoutchouc est choisie par l'homme du métier selon le spectre d'absorption spectroscopique du catalyseur photoactivable ou du photosensibilisateur. Comme sources d'irradiation peuvent convenir par exemple les lampes ou lasers qui émettent dans l'ultraviolet (UV) ou le visible, tels que les lampes UV, les lasers UV (ultraviolet), les lampes LED (« light emitting diode »), les lasers LED.

L'irradiation est réalisée de préférence avec une lumière de longueurs d'onde de 200 à 800 nm.

L'exposition de la composition de caoutchouc silicone à l'irradiation déclenche la réaction d'hydrosilylation des groupes alcényles du premier organopolysiloxane par les motifs (R'HSiO_{2/2}) du deuxième organopolysiloxane, ce qui provoque la réticulation de la composition de caoutchouc silicone.

Selon un premier mode de réalisation de l'invention, la composition de caoutchouc silicone contient une silice hydrophobe. L'ajout de silice hydrophobe à la composition de caoutchouc silicone permet de conférer une bien meilleure résistance mécanique à la composition de caoutchouc silicone réticulée qui recouvre la surface de la membrane, ce qui contribue à augmenter davantage la durée de vie de la membrane de cuisson.

De manière connue, une silice hydrophobe est une silice dont une partie de la surface est recouverte de groupes organiques tels que des groupes alkyles. La silice peut être toute silice renforçante connue de l'homme du métier, notamment toute silice précipitée ou pyrogénée. De préférence, la silice hydrophobe présente une surface spécifique BET inférieure à 450 m²/g, de manière préférentielle comprise dans un domaine allant de 80 à 400 m²/g, notamment de 100 à 300 m²/g, avantageusement de 150 à 250 m²/g. On peut aussi utiliser un mélange de plusieurs silices hydrophobes.

Pour rendre la silice hydrophobe, il est bien connu de modifier la surface de la silice. La modification de la surface d'une silice peut être obtenue de manière connue par réaction de la silice avec des composés qui portent des groupes hydrophobes comme les groupes trialkylsilyles, notamment triméthylsilyles. Convient tout particulièrement une silice qui présente une surface modifiée par des groupes triméthylsilyles, plus particulièrement une silice modifiée par l'hexaméthyldisilazane. Selon l'un quelconque des modes de réalisation de l'invention, la silice hydrophobe contient préférentiellement plus de 2% en masse de carbone, plus préférentiellement au moins 3% en masse de carbone.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0.05 à 0.17].

Le taux de silice hydrophobe est ajusté par l'homme du métier en fonction de sa surface spécifique et de l'usage de la composition de caoutchouc silicone. Dans le premier mode de réalisation, la silice hydrophobe est présente dans la composition de caoutchouc silicone à un taux massique préférentiellement supérieur ou égal à 5% du poids de la composition de caoutchouc silicone et préférentiellement inférieur ou égal à 40% du poids de la composition de caoutchouc silicone, auquel cas la composition de caoutchouc silicone contient une silice hydrophobe, à un taux massique préférentiellement supérieur ou égal à 5% du poids de la composition de caoutchouc silicone et préférentiellement inférieur ou égal à 40% du poids de la composition de caoutchouc silicone.

Selon un deuxième mode de réalisation de l'invention, la composition de caoutchouc silicone contient des microparticules de polyamide qui présentent une température de fusion supérieure à 100°C. L'incorporation des microparticules de polyamide dans la composition de caoutchouc silicone permet d'améliorer les propriétés de résistance au frottement de la surface de la membrane recouverte de la composition de caoutchouc silicone réticulée. Ce résultat est obtenu sans que le revêtement ne perde de sa souplesse pour pouvoir se déformer au gré des cycles de cuisson et puisse garder son adhérence à la surface de la membrane de cuisson malgré les déformations répétées de la membrane qui se déploie et se replie sur elle-même à chaque cycle de cuisson. Rappelons que le frottement est causé par des mouvements relatifs se produisant entre la membrane et l'enveloppe de pneumatique lorsque la membrane de cuisson se déploie à l'intérieur de l'enveloppe crue avant la cuisson et se replie à la fin.

Les microparticules de polyamide peuvent être des produits disponibles commercialement, par exemple par la société Arkema telles que celles commercialisées sous le nom « Orgasol ». Les microparticules de polyamide peuvent être de toute forme, préférentiellement elles sont sphériques.

Les microparticules de polyamide présentent de préférence une température de fusion supérieure à 150°C. La température de fusion est conventionnellement mesurée selon la norme ASTM D3418-03. A titre de polyamides qui conviennent, on peut citer le nylon 6, le nylon 6,6, le nylon 6,10, le nylon 6,12, le nylon 11 et le nylon 12. Les microparticules de polyamide présentent de préférence une granulométrie de 5 à 100 µm, avantageusement de 10 à 70 µm. La granulométrie est déterminée typiquement selon la norme ISO 13319-2007. Dans le deuxième mode de réalisation, le taux massique des microparticules de polyamide dans la composition de caoutchouc silicone est préférentiellement supérieur ou égal à 5% du poids de la composition de caoutchouc silicone et préférentiellement inférieur ou égal à 15% du poids de la composition de caoutchouc silicone, auquel cas la composition de caoutchouc silicone contient les microparticules de polyamide à un taux massique préférentiellement supérieur ou égal à 5% du poids de la composition de caoutchouc silicone et préférentiellement inférieur ou égal à 15% du poids de la composition de caoutchouc silicone.

Selon un troisième mode de réalisation de l'invention, la composition de caoutchouc silicone contient une poudre micrométrique de silicone. On entend par poudre micrométrique une poudre constituée de microparticules. La présence de la poudre micrométrique de silicone dans la composition de caoutchouc silicone favorise le glissement de la surface de la membrane recouverte de la composition de caoutchouc silicone réticulée sur la surface de la gomme intérieure tout en facilitant l'évacuation des gaz de cuisson. L'amélioration du glissement permet de supprimer les défauts de moulage, de réduire les dégradations de l'état de surface de la membrane, ce qui permet de prolonger la durée de vie d'une membrane de cuisson expansible et d'augmenter le nombre de cycles de cuisson par membrane.

La poudre micrométrique de silicone est constituée préférentiellement de microparticules de taille moyenne allant de 5 à 100 µm, plus préférentiellement allant de 5 à 50 µm. L'analyse de la taille des microparticules peut être réalisée pour déterminer en particulier la taille moyenne des microparticules (ou diamètre médian pour des microparticules supposées sensiblement sphériques), notamment selon la norme ISO-8130-13.

Les poudres micrométriques de silicone sont des produits bien connus et sont par exemple décrites dans la demande de brevet US 5,538,793. Ce sont aussi des produits disponibles commercialement, par exemple sous les dénominations commerciales « KMP-594 », « KMP-597 », « KMP-598 », « KMP-600 », « KMP- 601 » et « KMP-602 » de Shin-Etsu Co. De préférence, la poudre micrométrique de silicone est constituée de microparticules de caoutchouc silicone réticulé recouvertes d'une résine silicone, la résine silicone étant un polyorganosilsesquioxane. Conviennent tout particulièrement les microparticules d'appellation commerciales « KMP-600 », « KMP- 601 » et « KMP-602 » de Shin-Etsu Co, encore plus particulièrement les microparticules d'appellation commerciales « KMP-602 ». La poudre micrométrique de silicone a préférentiellement une dureté Shore A inférieure à 60, plus préférentiellement inférieure à 50, encore plus préférentiellement comprise entre 20 et 40. De manière bien connue, la dureté Shore A est déterminée typiquement par la norme ASTM D 2240-97.

Dans le troisième mode de réalisation, la poudre micrométrique de silicone est présente dans la composition de caoutchouc silicone préférentiellement à un taux massique de 5 à 35% du poids de la composition de caoutchouc silicone, auquel cas la composition de caoutchouc silicone contient la poudre micrométrique de silicone à un taux massique préférentiel de 5 à 35% du poids de la composition de caoutchouc silicone.

Selon un mode de réalisation particulier de l'invention, la composition de caoutchouc comprend une silice hydrophobe et des microparticules de polyamide telles que définies respectivement dans le premier mode de réalisation et dans le deuxième mode de réalisation, y compris dans leurs variantes préférentielles. Selon ce mode de réalisation, le taux massique total de silice hydrophobe et de microparticules de polyamide dans la composition de caoutchouc silicone varie préférentiellement de 10 à 45% du poids de la composition de caoutchouc silicone, les microparticules de polyamide étant présentes à un taux massique allant préférentiellement de 5 à 15% du poids de la composition de caoutchouc silicone, la silice hydrophobe à un taux massique préférentiellement supérieur ou égal à 5% du poids de la composition de caoutchouc silicone et préférentiellement inférieur ou égal à 40% du poids de la composition de caoutchouc silicone.

Selon un autre mode de réalisation particulier de l'invention, la composition de caoutchouc comprend une poudre micrométrique de silicone et des microparticules de polyamide telles que définies respectivement dans le troisième mode de réalisation et dans le deuxième mode de réalisation, y compris dans leurs variantes préférentielles. Selon ce mode de réalisation, la poudre micrométrique de silicone est présente à un taux massique allant préférentiellement de 5% à 35% du poids de la composition de caoutchouc silicone, les microparticules de polyamide à un taux massique allant préférentiellement de 5 à 15% du poids de la composition de caoutchouc silicone.

Selon encore un autre mode de réalisation particulier de l'invention, la composition de caoutchouc comprend une silice hydrophobe, une poudre micrométrique de silicone et des microparticules de polyamide telles que définies respectivement dans le premier mode de réalisation, dans le troisième mode de réalisation et dans le deuxième mode de réalisation, y compris dans leurs variantes préférentielles. Selon ce mode de réalisation, la silice hydrophobe est présente à un taux massique préférentiellement supérieur ou égal à 5% du poids total de la composition de caoutchouc silicone et inférieur ou égal à 40% du poids total de la composition de caoutchouc silicone, la poudre micrométrique de silicone est présente à un taux massique allant préférentiellement de 5 à 35% du poids de la composition de caoutchouc silicone, les microparticules de polyamide sont présentes à un taux massique préférentiellement supérieur ou égal à 5% du poids de la composition de caoutchouc silicone et préférentiellement inférieur ou égal à 15% du poids de la composition de caoutchouc silicone, le taux massique total de silice hydrophobe et de microparticules de polyamide variant préférentiellement de 10 à 45% du poids de la composition de caoutchouc silicone.

De préférence, selon l'un quelconque des modes de réalisation de l'invention, y compris dans leur variantes préférentielles, la composition de caoutchouc contient en outre un solvant silicone. Comme solvant silicone conviennent tout particulièrement les siloxanes qui ont un point d'ébullition à pression atmosphérique (1 atm) inférieur à 250°C. A ce titre, on peut citer les trisiloxanes linéaires, les tétrasiloxanes linéaires, les cyclopentasiloxanes et leurs mélanges, par exemple l'octaméthyltrisiloxane, le décaméthyltétrasiloxane, le décaméthylcyclopentasiloxane, les produits commercialisés comme additifs dans les cosmétiques tels que le diméthicone « BRB DM 55 » commercialisé par la société BRB, le propylheptaméthyltrisiloxane « SIBRID TM-031 » commercialisé par la société Gelest, le trisiloxane « KF-96A_1cs », les diméthicones « KF-96L-1.5cs » et « KF-96L-2cs » commercialisés par Shin-Etsu. L'utilisation de solvant dans la composition de caoutchouc permet de faciliter l'incorporation des constituants de la composition de caoutchouc silicone et leur homogénéisation dans la composition de caoutchouc silicone, et le cas échéant d'ajuster la viscosité de la composition de caoutchouc silicone en vue de son application sur la surface externe de la membrane. Tout ou partie du solvant est éliminé au cours de la réticulation de la composition de caoutchouc silicone.

Selon l'un quelconque des modes de réalisation de l'invention, la quantité massique totale du premier et du deuxième organopolysiloxanes représente préférentiellement plus de 50% en masse de la composition de caoutchouc silicone.

Selon l'un quelconque des modes de réalisation de l'invention, la composition de caoutchouc silicone est typiquement préparée par mélangeage des constituants qui la composent. Avant sa réticulation, la composition de caoutchouc silicone est appliquée sous la forme d'une couche sur la surface externe d'une membrane expansible de cuisson pour constituer un revêtement à la surface de la membrane après réticulation photochimique de la composition de caoutchouc silicone. L'application peut se faire à l'aide de pinceau, de brosse ou par projection (« spray » en anglais). La composition de caoutchouc silicone réticulée se présente préférentiellement sous la forme d'une couche d'épaisseur allant de 10 à 500 µm, plus préférentiellement de 10 à 200 µm, plus préférentiellement de 10 à 100 µm.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemples

### II.1 Tests et mesures :

### Test d'allongement :

L'échantillon à tester est obtenu par un emporte-pièce de 10[mm] x 140[mm]. L'échantillon est placé dans un étau. A l'aide d'une pince et d'une règle de 300[mm], on étire l'échantillon jusqu'à avoir 100% de déformation. Cette déformation est faite 10x à une fréquence de 1 Hz.

### Test de frottement :

Il est effectué sur une barre en acier de rugosité environ 1.6. Diamètre 12[mm] et longueur 70[mm]. On place la barre verticalement dans l'étau. On prend l'échantillon déjà testé en allongement. On effectue des va-et-vient de l'échantillon avec une courbure de 180° côté traité (face de l'échantillon revêtue de la composition de caoutchouc silicone) contre la barre en exerçant une force de frottement de 5 kilogramme-force. On répète 20 cycles, un cycle correspondant à un va-et-vient à une fréquence comprise entre 1 et 2 Hz.

### Analyse :

Après le test d'allongement ou de frottement, l'échantillon est observé par analyse de microscopie à balayage (modèle FEG 250 de la société FEI/ThermoFischer, détecteur ETD Everhart Thornley detector, 1 kV) pour vérifier la présence ou non de fissures ou de décollement. L'analyse de microscopie permet d'estimer aussi l'épaisseur de la couche de la composition de caoutchouc silicone appliquée comme revêtement.

### II.2 Préparation des compositions de caoutchouc et résultats :

### Exemple 1 : conforme à l'invention

Une silice pyrogénée hydrophobe (6.0 g, « HDK-2000 », Wacker) est incorporée à un polydiméthysiloxane α,ω-vinyle (10.36 g, « DMS V35 », Gelest, masse moléculaire moyenne en poids, Mw, 49500 g/mol, 2 motifs vinyle/mol) par mélangeage d'une minute dans un mélangeur (« StateMix »). On ajoute le décaméthylcyclopentasiloxane (11.5 g, TCI Europe, D1890) par mélangeage d'une minute dans le mélangeur (« StateMix »). Les microparticules de polyamide (2.0 g, « Orgasol ES3 Nat 3 », Arkema) sont ajoutées et le tout est mélangé pendant une minute dans le mélangeur (« State Mix »). Dans le mélange résultant, on incorpore une solution de poly(méthylhydro)siloxane (PHMS) (0.82g, Mw 3200 g/mol, 52 motifs (MeHSiO_{2/2}), référence 17,620-6, Sigma Aldrich) dans le décamethylcyclopentasiloxane (4.8 g, TCI Europe, D1890) par mélangeage dans le mélangeur (« StateMix »). On ajoute pour terminer une solution d'un catalyseur photoactivable (« UV LSR KAT », 1.0 g, Momentive, USA) dans le décamethylcyclopentasiloxane (3.4g, TCI Europe, D1890). Le mélange résultant est homogénéisé dans le mélangeur (« State Mix ») pendant une minute. Dans la composition de caoutchouc silicone, le ratio entre le nombre de motifs (MeHSiO_{2/2}) et le nombre de groupes vinyles est supérieur à 1 (égal à 32).

La composition de caoutchouc silicone ainsi obtenue est appliquée à l'aide d'un pinceau sous la forme d'une couche sur une membrane expansible de cuisson à base de caoutchouc butyle. Le mélange silicone est réticulé photochimiquement sous l'exposition à une irradiation à une longueur d'onde de 200-800 nm (lampe UV « Uvaprint 100-200 HPCV2 », Honle / Germany, disposée à distance de 25 cm de la surface externe) deux fois 3 minutes avec 3 minutes de pause entre les deux irradiations (200 W/cm pour une longueur d'arc de 100 mm et puissance : 20W/cm²).

La composition de caoutchouc silicone réticulée d'épaisseur 20-50 µm présente une bonne adhérence à la membrane et ne se décolle pas de la membrane même après avoir subi successivement 10 élongations à 100% de déformation. Il est aussi observé que les microparticules de polyamide ne sont pas éliminées du revêtement par frottement. Les microparticules de polyamide ne sont pas arrachées du revêtement lorsqu'il est soumis au test de frottement.

### Exemple 2 : conforme à l'invention

Une silice pyrogénée hydrophobe (6.0 g, « HDK-2000 », Wacker) est incorporée à un polydiméthysiloxane α,ω-vinyle (10.36 g, « DMS V35 », Gelest) par mélangeage d'une minute dans un mélangeur (« StateMix »). On ajoute le décaméthylcyclopentasiloxane (11.5 g, TCI Europe, D1890) par mélangeage d'une minute dans le mélangeur (« StateMix »). Les microparticules de polyamide (2.0 g, « Orgasol ES3 Nat 3 », Arkema) sont ajoutées et le tout est mélangé au mélangeur pendant 1 minute (State Mix). Dans le mélange résultant, on incorpore une solution de poly(méthylhydro)siloxane (PHMS) (0.82g, référence 17,620-6, Sigma Aldrich) dans le décamethylcyclopentasiloxane (4.8 g, TCI Europe, D1890) par mélangeage dans le mélangeur (« StateMix »). Dans le mélange résultant est introduit 0.050g d'un photoactivateur, le thioxanthèn-9-one (Sigma Aldrich, T34002) solubilisé dans 10 ml de chloroforme par un mélangeage de 30 seconds dans le mélangeur (« StateMix »). Le chloroforme est ensuite distillé et séché au four à vide (70 °C / 10 mbar) pendant une heure. On ajoute pour terminer une solution du catalyseur photoactivable (« UV LSR KAT », 1.0 g, Momentive, USA) dans le décamethylcyclopentasiloxane (3.4g, TCI Europe, D1890). Le mélange résultant est homogénéisé dans le mélangeur (« State Mix ») pendant 1 minute. Dans la composition de caoutchouc silicone, le ratio entre le nombre de motifs (MeHSiO_{2/2}) et le nombre de groupes vinyles est supérieur à 1 (égal à 32).

La composition de caoutchouc silicone ainsi obtenue est appliquée à l'aide d'un pinceau sous la forme d'une couche sur une membrane expansible de cuisson à base de caoutchouc butyle. Le mélange silicone est réticulé photochimiquement sous l'exposition à une irradiation à une longueur d'onde de 395 nm (lampe « AC9225F-395 UV LED head », OmniCure, Excelitas, Canada, disposée à distance de 10 cm de la surface externe) pendant 40 secondes (puissance : 4W/cm²). La composition de caoutchouc silicone a bien réticulé (épaisseur 20-50 µm).

La composition de caoutchouc silicone réticulée d'épaisseur 20-50 µm présente une bonne adhérence à la membrane et ne se décolle pas de la membrane même après avoir subi successivement 10 élongations à 100% de déformation. Il est aussi observé que les microparticules de polyamide ne sont pas éliminées du revêtement par frottement. Les microparticules de polyamide ne sont pas arrachées du revêtement lorsqu'il est soumis au test de frottement.

### Exemple 3 : non conforme à l'invention

2.5 g de catalyseur photoactivable (« UV LSR CAT », Momentive, USA) est introduit dans 25 g de polydiméthysiloxane α,ω-vinyle (« Silopren UV LSR 2030 », Momentive, USA) par mélangeage d'une minute dans un mélangeur (« StateMix »). Dans le mélange résultant est introduit 0.100 g d'un photoactivateur, le thioxanthen-9-one (Sigma Aldrich, T34002) solubilisé dans 10 ml de chloroforme par mélangeage de 30 secondes dans le mélangeur (« StateMix »). Le chloroforme est ensuite distillé et séché au four à vide (70 °C / 10 mbar) pendant une heure.

La composition de caoutchouc silicone (couleur jaune) ainsi obtenue est appliquée à l'aide d'un pinceau sous la forme d'une couche sur une membrane expansible de cuisson à base de caoutchouc butyle. Le mélange silicone est réticulé photochimiquement sous l'exposition à une irradiation à une longueur d'onde de 395 nm (lampe UV « AC9225F-395 UV LED head », OmniCure, Excelitas, Canada, disposée à distance de 10 cm de la surface externe) pendant 40 secondes (puissance : 4W/cm²). La composition de caoutchouc silicone a bien réticulé (épaisseur 20-50 µm) mais n'adhère pas à la membrane et se décolle de la membrane même après avoir subi successivement 10 élongations à 100% de déformation.

### Exemple 4 : non conforme à l'invention :

Une silice pyrogénée hydrophobe (5.846 g, « HDK-2000 », Wacker) est incorporée à un polydiméthysiloxane α,ω-vinyle (10.815 g, « DMS V35 », Mw 49500, Gelest) par mélangeage d'une minute dans un mélangeur (« StateMix »). On ajoute ensuite une solution d'inhibiteur (11mg, 1-éthynyl-1-cyclohexanol, Aldrich E51406) dans le décamethylcyclopentasiloxane (10.366 g, TCI Europe, D1890) par mélangeage d'une minute dans le mélangeur (« StateMix »). Les microparticules de polyamide (1.95 g, « Orgasol ES3 Nat 3 », diamètre 30 µm, Arkema) sont ajoutées et le tout est mélangé au mélangeur 1 minute (State Mix). Dans le mélange résultant, on incorpore une solution de PHMS (0.86g, poly(méthylhydro)siloxane, Mw 3200, référence 17,620-6, Sigma Aldrich) dans le décamethylcyclopentasiloxane (4.21g, D, TCI Europe, D1890) par mélangeage dans le mélangeur (StateMix, fonctionnant à 100% de sa puissance). On ajoute pour terminer une solution du catalyseur Karstedt (36.1 µl, Aldrich 479519) dans le décamethylcyclopentasiloxane (15.89g, TCI Europe, D1890). Le mélange résultant est homogénéisé dans le mélangeur (« State Mix ») 1 minute. Dans la composition de caoutchouc silicone, le ratio entre le nombre de motifs (MeHSiO_{2/2}) et le nombre de groupes vinyles est supérieur à 1 (égal à 32).

La composition de caoutchouc silicone ainsi obtenue est appliquée à l'aide d'un pinceau sous la forme d'une couche sur une membrane de cuisson à base de caoutchouc butyl. Le stratifié résultant est porté à 150°C pendant 30 minutes dans un four à air ventilé.

La composition de caoutchouc silicone réticulée d'épaisseur 20-50 µm présente une bonne adhérence à la membrane et ne se décolle pas de la membrane même après avoir subi successivement 10 élongations à 100% de déformation. Il est aussi observé que les microparticules de polyamide ne sont pas éliminées du revêtement par frottement. Les microparticules de polyamide ne sont pas arrachées du revêtement lorsqu'il est soumis au test de frottement.

Les exemples 1 et 2 sont des exemples conformes à l'invention, puisque les compositions de caoutchouc silicone présentent toutes les caractéristiques utiles aux besoins de l'invention, notamment un ratio entre le nombre de motifs (R'HSiO_{2/2}) et le nombre de groupes alcényles supérieur à 1, un catalyseur d'hydrosilylation photoactivable et sont appliquées sur la couche externe d'une membrane de cuisson, puis réticulées par irradiation UV-visible. L'exemple 3 est un exemple non conforme, puisque la composition de caoutchouc appliquée sur la surface de la membrane ne contient pas de deuxième organopolysiloxane ayant des motifs de répétition (R'HSiO_{2/2}).

L'exemple 4 est un exemple non conforme, puisque le catalyseur d'hydrosilylation de la composition de caoutchouc appliquée sur la surface de la membrane n'est pas photoactivable et que la composition de caoutchouc est réticulée par activation thermique à 150°C.

Les résultats montrent que le procédé conforme à l'invention mène à la préparation de membranes de cuisson avec un revêtement qui présente une bonne résistance à la délamination. Ces résultats sont aussi obtenus par la mise en oeuvre d'étapes simples et rapides. Le procédé permet bien de s'affranchir de traitements chimiques préalables de la surface de la membrane que sont les traitements avec un primaire d'adhésion, au plasma ou au corona. La composition de caoutchouc silicone utilisée à l'étape a) est aussi préparée par des opérations simples de mélangeage. Sa réticulation à la surface de la membrane de cuisson au cours de l'étape b) s'effectue aussi en quelques minutes. La mise en oeuvre du procédé conforme à l'invention permet d'assurer une bonne productivité dans la préparation des membranes de cuisson modifiées aptes à être utilisées dans des presses de cuisson de pneumatique.

## Revendications

1. Procédé de modification d'une membrane expansible de cuisson pour pneumatique, laquelle membrane présente une surface destinée à entrer au contact d'une enveloppe d'un pneumatique, lequel procédé comprend les étapes suivantes :
a) Appliquer sur ladite surface une couche d'une composition de caoutchouc silicone, la composition de caoutchouc silicone comprenant un premier organopolysiloxane liquide ayant des motifs de répétition (R₂SiO_{2/2}) et ayant deux extrémités de chaîne portant chacune un groupe alcényle, un deuxième organopolysiloxane liquide ayant des motifs de répétition (R'HSiO_{2/2}) et ayant deux extrémités de chaîne portant chacune un groupe SiR'₃O_{1/2}, et un catalyseur d'hydrosilylation photoactivable, les symboles R, identiques ou différents, représentant un groupe alkyle, aryle ou aralkyle, les symboles R', identiques ou différents, représentant un groupe alkyle, le ratio entre le nombre de motifs (R'HSiO_{2/2}) et le nombre de groupes alcényles étant supérieur à 1,
b) Exposer la composition de caoutchouc silicone recouvrant ladite surface à une irradiation de la lumière ultraviolet-visible.

2. Procédé selon la revendication 1 dans lequel le catalyseur d'hydrosilylation photoactivable est un catalyseur au platine, Pt.

3. Procédé selon l'une quelconque des revendications 1 à 2 dans lequel le catalyseur d'hydrosilylation photoactivable est un complexe organométallique ayant au moins une liaison sigma métal-carbone, de préférence un complexe au platine avec un ou plusieurs ligands sigma, le ligand étant alkyle.

4. Procédé selon l'une quelconque des revendications 1 à 3 dans lequel le catalyseur d'hydrosilylation photoactivable est un complexe de formule Pt (η⁵-Cp¹) L₃, Cp¹ désignant le groupe cyclopentadiényle, un groupe cyclopentadiényle substitué par des groupes alkyles ou trialkylsilyles, et les symboles L, identiques ou différents désignant alkyle, de préférence le complexe triméthyl(pentaméthylcyclopentadiényl)platine.

5. Procédé selon l'une quelconque des revendications 1 à 4 dans lequel la composition de caoutchouc comprend en outre un photosensibilisateur.

6. Procédé selon l'une quelconque des revendications 1 à 5 dans lequel les groupes alcényles sont des groupes vinyles.

7. Procédé selon l'une quelconque des revendications 1 à 6 dans lequel le ratio entre le nombre de motifs (R'HSiO_{2/2}) et le nombre de groupes alcényles est supérieur à 5, de préférence supérieur à 15, de manière plus préférentielle supérieur à 25.

8. Procédé selon l'une quelconque des revendications 1 à 7 dans lequel le ratio entre le nombre de motifs (R'HSiO_{2/2}) et le nombre de groupes alcényles est inférieur à 100, préférentiellement inférieur à 90.

9. Procédé selon l'une quelconque des revendications 1 à 8 dans lequel les groupes représentés par les symboles R et R' contiennent 1 à 8 atomes de carbone, préférentiellement 1 à 3 atomes de carbone, plus préférentiellement sont méthyle.

10. Procédé selon l'une quelconque des revendications 1 à 9 dans lequel le premier organopolysiloxane est un polydialkylsiloxane, de préférence un polydiméthylsiloxane, et le deuxième organopolysiloxane est un polyhydrométhylsiloxane.

11. Procédé selon l'une quelconque des revendications 1 à 10 dans lequel la composition de caoutchouc silicone contient une silice hydrophobe, à un taux massique préférentiellement supérieur ou égal à 5% du poids de la composition de caoutchouc silicone et préférentiellement inférieur ou égal à 40% du poids de la composition de caoutchouc silicone.

12. Procédé selon l'une quelconque des revendications 1 à 11 dans lequel la composition de caoutchouc silicone contient des microparticules de polyamide ayant une température de fusion supérieure à 100°C, à un taux massique préférentiellement supérieur ou égal à 5% du poids de la composition de caoutchouc silicone et préférentiellement inférieur ou égal à 15% du poids de la composition de caoutchouc silicone.

13. Procédé selon l'une quelconque des revendications 1 à 12 dans lequel la composition de caoutchouc silicone contient une poudre micrométrique de silicone à un taux massique préférentiel de 5% à 35% du poids de la composition de caoutchouc silicone, la poudre micrométrique de silicone étant préférentiellement constituée de microparticules de caoutchouc silicone réticulé recouvertes d'une résine silicone, la résine silicone étant un polyorganosilsesquioxane.

14. Procédé selon l'une quelconque des revendications 1 à 13 dans lequel la composition de caoutchouc silicone contient un solvant silicone.

15. Procédé selon l'une quelconque des revendications 1 à 14 dans lequel la quantité massique totale du premier et du deuxième organopolysiloxanes représente préférentiellement plus de 50% en masse de la composition de caoutchouc silicone.

## Patentansprüche

1. Verfahren zur Modifizierung einer dehnbaren Vulkanisationsmembran für einen Reifen, wobei die Membran eine Fläche aufweist, die dazu bestimmt ist, mit einer Hülle eines Reifens in Kontakt zu gelangen, wobei das Verfahren die folgenden Schritte umfasst:
a) Applizieren auf die Fläche einer Schicht einer Silikonkautschukzusammensetzung, wobei die Silikonkautschukzusammensetzung ein erstes flüssiges Organopolysiloxan, das Repetiereinheiten (R₂SiO_{2/2}) aufweist und zwei Kettenenden aufweist, die jeweils eine Alkenylgruppe tragen, ein zweites flüssiges Organopolysiloxan, das Repetiereinheiten (R'HSiO_{2/2}) aufweist und zwei Kettenenden aufweist, die jeweils eine SiR'₃O_{1/2}-Gruppe tragen, und einen photoaktivierbaren Hydrosilylierungskatalysator umfasst, wobei die identischen oder unterschiedlichen Symbole R eine Alkyl- , Aryl- oder Aralkylguppe repräsentieren, wobei die identischen oder unterschiedlichen Symbole R' eine Alkylgruppe repräsentieren, wobei das Verhältnis zwischen der Anzahl von Einheiten (R'HSiO_{2/2}) und der Anzahl von Alkenylgruppen größer als 1 ist,
b) Aussetzen der die Fläche bedeckenden Silikonkautschukzusammensetzung einer Bestrahlung mit sichtbarem ultraviolettem Licht.

2. Verfahren nach Anspruch 1, bei dem der photoaktivierbare Hydrosilylierungskatalysator ein Katalysator mit Platin, Pt, ist.

3. Verfahren nach einem der Ansprüche 1 bis 2, bei dem der photoaktivierbare Hydrosilylierungskatalysator ein organometallischer Komplex ist, der mindestens eine Metall-Kohlenstoff-Sigmabindung aufweist, bevorzugt ein Komplex mit Platin mit einem oder mehreren Sigma-Liganden, wobei der Ligand Alkyl ist.

4. Verfahren nach einem der Ansprüche 1 bis 3, bei dem der photoaktivierbare Hydrosilylierungskatalysator ein Komplex mit der Formel Pt (η⁵-Cp¹) L₃ ist, wobei Cp¹ die Cyclopentadienylgruppe bezeichnet, eine durch Alkyl- oder Trialkylsilylgruppen substituierte Cyclopentadienylgruppe, und wobei die identischen oder unterschiedlichen Symbole L Alkyl bezeichnen, bevorzugt der Komplex Trimethyl(pentamethylcyclopentadienyl)platin.

5. Verfahren nach einem der Ansprüche 1 bis 4, bei dem die Kautschukzusammensetzung ferner einen Photosensibilisator umfasst.

6. Verfahren nach einem der Ansprüche 1 bis 5, bei dem die Alkenylgruppen Vinylgruppen sind.

7. Verfahren nach einem der Ansprüche 1 bis 6, bei dem das Verhältnis zwischen der Anzahl von Einheiten (R'HSiO_{2/2}) und der Anzahl von Alkenylgruppen größer als 5, bevorzugt größer als 15, noch bevorzugter größer als 25 ist.

8. Verfahren nach einem der Ansprüche 1 bis 7, bei dem das Verhältnis zwischen der Anzahl von Einheiten (R'HSiO_{2/2}) und der Anzahl von Alkylgruppen kleiner als 100, bevorzugt kleiner als 90 ist.

9. Verfahren nach einem der Ansprüche 1 bis 8, bei dem die durch die Symbole R und R' repräsentierten Gruppen 1 bis 8 Kohlenstoffatome, bevorzugt 1 bis 3 Kohlenstoffatome enthalten, noch bevorzugter Methyl sind.

10. Verfahren nach einem der Ansprüche 1 bis 9, bei dem das erste Organopolysiloxan ein Polydialkylsiloxan, bevorzugt ein Polydimethylsiloxan ist und das zweite Organopolysiloxan ein Polyhydromethylsiloxan ist.

11. Verfahren nach einem der Ansprüche 1 bis 10, bei dem die Silikonkautschukzusammensetzung eine hydrophobe Kieselsäure mit einem Massenanteil von bevorzugt größer als oder gleich 5 % des Gewichts der Silikonkautschukzusammensetzung und bevorzugt kleiner als oder gleich 40 % des Gewichts der Silikonkautschukzusammensetzung enthält.

12. Verfahren nach einem der Ansprüche 1 bis 11, bei dem die Silikonkautschukzusammensetzung Polyamid-Mikropartikel, die eine Schmelztemperatur von mehr als 100 °C aufweisen, mit einem Massenanteil von bevorzugt größer als oder gleich 5 % des Gewichts der Silikonkautschukzusammensetzung und bevorzugt kleiner als oder gleich 15 % des Gewichts der Silikonkautschukzusammensetzung enthält.

13. Verfahren nach einem der Ansprüche 1 bis 12, bei dem die Silikonkautschukzusammensetzung ein mikrometrisches Silikonpulver mit einem Massenanteil von bevorzugt 5 % bis 35 % des Gewichts der Silikonkautschukzusammensetzung enthält, wobei das mikrometrische Silikonpulver bevorzugt aus Mikropartikeln von vernetztem Silikonkautschuk besteht, die mit einem Silikonharz überzogen sind, wobei das Silikonharz ein Polyorganosilsesquioxan ist.

14. Verfahren nach einem der Ansprüche 1 bis 13, bei dem die Silikonkautschukzusammensetzung ein Silikonlösungsmittel enthält.

15. Verfahren nach einem der Ansprüche 1 bis 14, bei dem die Gesamtmassenmenge des ersten und des zweiten Organopolysiloxans bevorzugt mehr als 50 Massen-% der Silikonkautschukzusammensetzung ausmacht.

## Claims

1. A process for modifying an expandable curing bladder for a tire, which bladder has a surface intended to come into contact with a tire casing, which process comprises the following steps:
a) applying to said surface a layer of a silicone rubber composition, the silicone rubber composition comprising a first liquid organopolysiloxane having repeating units (R₂SiO_{2/2}) and having two chain ends each bearing an alkenyl group, a second liquid organopolysiloxane having repeating units (R'HSiO_{2/2}) and having two chain ends each bearing a group SiR'₃O_{1/2} and a photoactivatable hydrosilylation catalyst, the symbols R, which may be identical or different, representing an alkyl, aryl or aralkyl group, the symbols R', which may be identical or different, representing an alkyl group, the ratio between the number of units (R'HSiO_{2/2}) and the number of alkenyl groups being greater than 1,
b) exposing the silicone rubber composition covering said surface to irradiation with ultraviolet-visible light.

2. The process as claimed in claim 1, in which the photoactivatable hydrosilylation catalyst is a platinum, Pt, catalyst.

3. The process as claimed in either of claims 1 and 2, in which the photoactivatable hydrosilylation catalyst is an organometallic complex containing at least one metal-carbon sigma bond, preferably a platinum complex with one or more sigma ligands, the ligand being alkyl.

4. The process as claimed in any one of claims 1 to 3, in which the photoactivatable hydrosilylation catalyst is a complex of the formula Pt(η⁵-Cp¹)L₃, Cp¹ denoting a cyclopentadienyl group, a cyclopentadienyl group substituted with alkyl or trialkylsilyl groups, and the symbols L, which may be identical or different, denoting alkyl, preferably the trimethyl(pentamethylcyclopentadienyl)platinum complex.

5. The process as claimed in any one of claims 1 to 4, in which the rubber composition also comprises a photosensitizer.

6. The process according to any one of claims 1 to 5, in which the alkenyl groups are vinyl groups.

7. The process as claimed in any one of claims 1 to 6, in which the ratio of the number of (R'HSiO_{2/2}) units to the number of alkenyl groups is greater than 5, preferably greater than 15, more preferentially greater than 25.

8. The process as claimed in any one of claims 1 to 7, in which the ratio of the number of (RHSiO_{2/2}) units to the number of alkenyl groups is less than 100, preferentially less than 90.

9. The process as claimed in any one of claims 1 to 8, in which the groups represented by the symbols R and R' contain from 1 to 8 carbon atoms, preferentially from 1 to 3 carbon atoms, and are more preferentially methyl.

10. The process as claimed in any one of claims 1 to 9, in which the first organopolysiloxane is a polydialkylsiloxane, preferably a polydimethylsiloxane, and the second organopolysiloxane is a polyhydromethylsiloxane.

11. The process as claimed in any one of claims 1 to 10, in which the silicone rubber composition contains a hydrophobic silica in a mass content preferentially greater than or equal to 5% of the weight of the silicone rubber composition and preferentially less than or equal to 40% of the weight of the silicone rubber composition.

12. The process as claimed in any one of claims 1 to 11, in which the silicone rubber composition contains polyamide microparticles with a melting point of greater than 100°C, in a mass content preferentially greater than or equal to 5% of the weight of the silicone rubber composition and preferentially less than or equal to 15% of the weight of the silicone rubber composition.

13. The process as claimed in any one of claims 1 to 12, in which the silicone rubber composition contains a micrometre-sized silicone powder in a preferential mass content of from 5% to 35% of the weight of the silicone rubber composition, the micrometre-sized silicone powder preferentially consisting of crosslinked silicone rubber microparticles covered with a silicone resin, the silicone resin being a polyorganosilsesquioxane.

14. The process as claimed in any one of claims 1 to 13, in which the silicone rubber composition contains a silicone solvent.

15. The process as claimed in any one of claims 1 to 14, in which the total mass amount of the first and second organopolysiloxanes preferentially represents more than 50% by mass of the silicone rubber composition.
